# EUROPEAN PATENT APPLICATION

(11) **EP 4 574 463 A2**
(43) Date of publication of application: **25.06.2025**
(21) Application number: 25175255.6
(22) Date of filing: 15.11.2022
(51) Int. Cl.: B60C 11/16

(54) **STUD AND ASSOCIATED METHODS AND PRODUCTS**

(30) Priority: 14.12.2021 SE 2151524
(62) Divisional of application: 22812687.6
(71) Applicant: Turvanasta Oy, 20360 Turku (FI)
(72) Inventor: HYÖKKI, Sami, 20360 Turku (FI); LAINE, Reko, 20360 Turku (FI); SALAKARI, Mikko, 20360 Turku (FI); SALAKARI, Heikki, 20360 Turku (FI)
(74) Representative: Laine IP Oy

(57) **Abstract**

According to a first aspect of the present disclosure, there is provided a stud (100) for a pneumatic tyre. The stud includes a sleeve (120), which comprises or is formed of a thermoplastic elastomer or silicone based material and which comprises a pin hole (126). The stud also includes a pin (110) being formed as a unitary piece form a wear resistant material or compound and inserted into the pin hole (126).

## Description

### FIELD

The present disclosure relates to anti-skid inserts for pneumatic tyres as well as to pneumatic tyres comprising the same and methods involving the manufacture or use of such inserts.

### BACKGROUND

For as long as studded winter tyres have been used on public roads, a constant challenge in stud design has been striking a balance between high grip, low road wear, and reliable attachment of the stud in the tyre.

As a solution, Oy Airam Ab disclosed in FI 77186 B a stud comprising with a sleeve around a wear resistant pin - a radical solution at the time. The pin was made from a homogenous material, such as pulverized hard metal, suitable for contacting the road surface. The sleeve, which was intended to sit stationary in the tyre tread, was made from a plastic with has good gliding properties for allowing the pin to translate in the pin hole formed into the sleeve. To prevent rotation of the pin about the center axis of the stud, the pin hole and the pin were provided with cooperating grooves and protrusions that extend along the center axis, respectively. According to FI 77186 B the form-locking grooves and protrusions were necessary to counteract wear of the harsh road conditions subjected to the plastic sleeve.

As elegant as the solution proposed by FI 77186 B may be, the invention disclosed therein was never used in a commercial product because the practical application was deemed to lack wear resistance. Plastic materials that exhibit satisfactory gliding properties required by the construction of FI 77186 B, such as polyamide, polyether ether ketone (PEEK), polycarbonate, ABS, blends of polycarbonate and ABS or polyamide and glass fiber, are injection moulded plastics that have transpired as unideal to endure harsh road conditions.

There still remains, however, a need for a stud that is gentle on the road but able to produce enough grip required for passenger vehicle use.

### SUMMARY

The present invention is defined by the features of the independent claims. Some specific embodiments are defined in the dependent claims.

According to a first aspect of the present disclosure, there is provided a stud for a pneumatic tyre. The stud includes a sleeve, which comprises or is formed of rubber, a thermoplastic elastomer or silicone based material and which comprises a pin hole. The stud also includes a pin being formed as a unitary piece from one or more than one wear resistant material or compound and inserted into the pin hole.

According to a second aspect of the present disclosure, there is provided a method of manufacturing such a stud. The method involves providing the pin as a unitary piece of one or more than one wear resistant material, providing the sleeve as unitary piece of rubber, a thermoplastic elastomer or silicone based material, and fitting the pin into the pin hole of the sleeve either as an insert placed in an injection mould or after moulding of the sleeve.

According to a third aspect of the present disclosure, there is provided a pneumatic winter tyre featuring a rubber tread and a plurality of studs according to the first aspect fitted into the tread.

According to a fourth aspect of the present disclosure, there is provided a method of manufacturing a pneumatic winter tyre according to the first aspect. The method involves providing a tyre with a tread, providing the tread with a plurality of stud holes, providing a plurality of such studs, and fitting the plurality of studs into the corresponding plurality of stud holes.

Certain embodiments of the present disclosure may include one feature or more that one from the following list:
- the stud exhibiting a tallness in a longitudinal dimension,
- the tallness of the stud is defined by the extension of the pin in the longitudinal dimension,
- the sleeve is configured to allow movement of the pin in the pin hole in the longitudinal dimension, in a transversal dimension in respect to the longitudinal dimension, or both in the longitudinal and transversal dimension,
- the sleeve is configured to allow rotational movement of the pin about a rotation axis, which extends in the longitudinal dimension,
- the sleeve is made from a material having a hardness between 45 and 75 Shore A at 23 degrees Celsius,
- the sleeve is made from a material having a hardness between 50 and 70 Shore A at 23 degrees Celsius,
- the sleeve is made from a material having a hardness between 60 and 65 Shore A, at 23 degrees Celsius,
- the sleeve is made from a material having a hardness between 62 and 64 Shore A, at 23 degrees Celsius,
- the pin comprises a flange at one end of the pin,
- the pin comprises a tip at another end of the pin,
- the pin comprises a shaft extending between the flange and tip,
- the flange exhibits a diameter across the longitudinal dimension of the stud, which flange diameter is greater than the respective diameter of the shaft,
- the flange diameter defines the greatest extension of the stud in the transversal dimension,
- the flange is exposed at one end of the sleeve,
- the tip is exposed at another end of the sleeve,
- the shaft is covered by the sleeve and extends through the pin hole,
- the pin is made from a material selected of a list comprising or consisting of hardened steel, hardened aluminium, an alloy comprising hardened steel or hardened aluminium, a composite, and a ceramic,
- the pin hole has a circular cross section,
- the sleeve has a circular cross section,
- the pin and sleeve is joined to the sleeve only through a mechanical joint there between,
- the pin is formed as a unitary piece from one single wear resistant material or compound,
- the pin is formed as a unitary piece from one single homogenous wear resistant material or compound,
- the pin is provided with a powder metallurgy manufacturing process,
- the pin is constructed as a homogenous unitary piece formed of a single wear resistant material,
- the pin is provided with a powder metallurgy process from more several raw materials to construct respective several sections of the unitary pin,
- the stud comprises no adhesive and/or lubricant between the pin and the sleeve,
- the tread and the sleeve of the stud both exhibit a hardness between 50 and 70 Shore A at 20 degrees Celsius,
- the tread and the sleeve of the stud both exhibit a hardness between 60 and 65 Shore A at 20 degrees Celsius,
- the elastic modulus of tread is equal to or different by 100 per cent, preferably 50 per cent, more preferably 25 per cent or less than the elastic modulus of the sleeve of the stud under similar measurement circumstances,
- the tyre or the method of manufacturing the tyre comprises a cross-linking catalyst between the sleeve and the stud hole.

Considerable benefits may be gained with at least certain embodiments of the present invention. By constructing the sleeve from a relatively soft material, e.g. thermoplastic elastomer, it has been surprisingly found that the stud is able to withstand the environmental impact better than the relatively hard plastic optimized for gliding that was previously preferred. Thermoplastic elastomers and silicone based materials have been found to endure salt and grease as well as fluctuating temperatures without cracking, a problem associated with conventional gliding plastics.

The properties of the proposed sleeve materials have shown properties enabling use as an excellent transitional adaptor between the relatively very soft winter tyre rubber compound used in the tread and the relatively hard and rigid pin used as the working component of the stud. Said adaptation benefits from the ability to match or at least relatively closely imitate the hardness of the sleeve material with that of the hosting rubber compound. Additionally, the sleeve material provides all the benefits found in the original sleeved stud concept, namely ability to support the pin by controlling axial and radial translation as well as tilting in respect to the longitudinal axis of the stud. The sleeve is also able to control vibrations of the stud thus mitigating the risk of the stud becoming loose in the tyre.

The construction provides surprising design advantages. The pin may be designed relatively freely to exhibit optimal gripping properties with a minimal bottom flange and/or with a flange that is shaped to cater for orientation of the stud in respect of the rolling direction of the tyre. The sleeve, on the other hand, may be designed to provide some or most of axial grip required to keep the pin in the tread. The sleeve may further be designed to connect the optimized pin to the host rubber tread so as to evenly distribute forces exerted by the pin to the rubber. More generally speaking, the sleeve may be designed to adjust the behaviour of the pin in the rubber. It may be understood that such flexibility in design also conveys modularity benefits.

According to a particular embodiment, the hardness of the sleeve material and the hosting tyre rubber are substantially matched with each other. Contrary to intuition, such a solution creates a virtually sleeveless stud, as the environment experienced by the pin is as if there was no sleeve. However, the sleeve nevertheless provides support that would not be present if the pin was simply inserted into the stud hole of the tyre. Accordingly, the pin may be allowed to move in the rubber even across the longitudinal axis thus minimizing scraping, which is detrimental to the road surface.

### BRIEF DESCRIPTION OF THE DRAWINGS

In the following certain embodiments of the present disclosure are discussed in greater detail with reference to the accompanying drawings, in which:
FIGURE 1 illustrates a side elevation view of an anti-slip stud in accordance with at least some embodiments of the present disclosure and

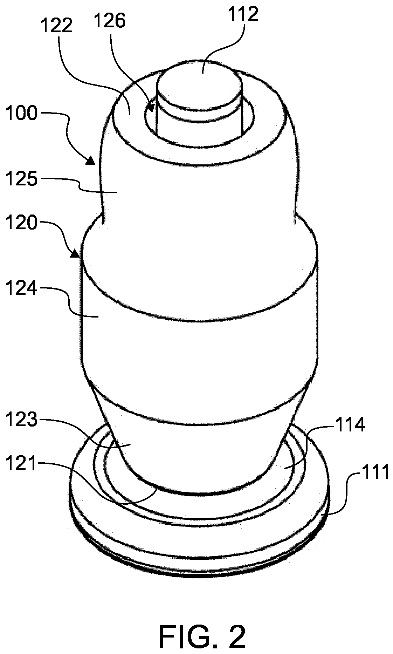

FIGURE 2 illustrates a top perspective view of the stud of FIGURE 1.

### EMBODIMENTS

Various embodiments herein described are based on a novel concept of a stud having a rubber, thermoplastic elastomer or silicone based sleeve on a wear resistant pin that is housed in a through hole of the sleeve. The sleeve acts as an adapted between the pin and the host, i.e. tyre tread. By being made of rubber, thermoplastic elastomer or silicone based material, the sleeve is able to transition the flexibility properties of the surrounding rubber tread and the relatively rigid pin. Also, the pin may be constructed as the body of the stud with the sleeve providing support and vibration control for the pin.

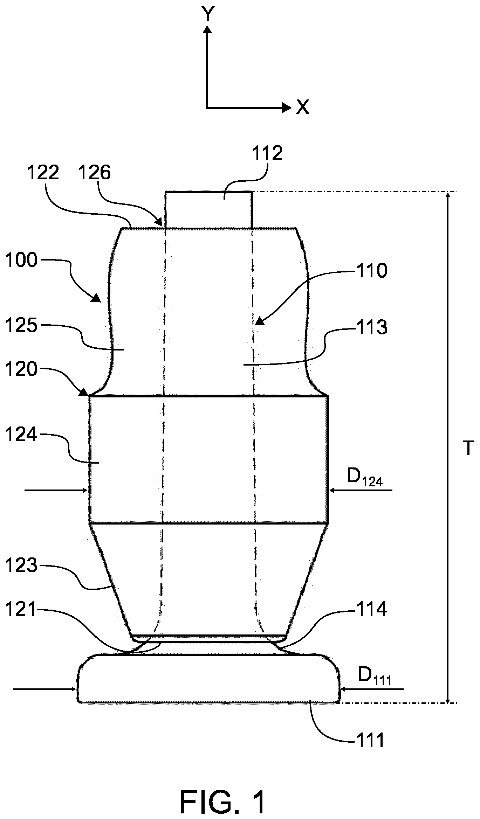

FIGURE 1 illustrates a stud 100, i.e. an anti-skid insert, in accordance with at least some embodiments of the present disclosure. The stud 100 has two main components, namely a pin 110 and a sleeve 120. The purpose of the pin 110 is to form the effective part of the stud 100 meaning that the pin 110 defines the grip properties of the stud 100. The purpose of the sleeve 120 is to fit the pin 110 into the tread of a pneumatic tyre. Let us first consider the details of the pin 110.

The pin 110 extends along a longitudinal dimension Y between a flange 111 and a tip 112. The pin 110 defines the tallness T of the stud 100 in the longitudinal dimension Y, i.e. the dimension, in which the stud 100 exhibits is greatest extension.

In the illustrated example the flange 111 has a circular cross section taken across the longitudinal dimension Y. However, other shapes are foreseeable, such as quadrilateral, trapezoidal, chamfered and/or rounded polygons, oval, and various fused shapes, such as two circles merged with a narrow web. The flange 111 has a diameter D₁₁₁, which may represent the widest part of the illustrated exemplary stud 100. The relationship between the flange diameter D₁₁₁ and the tip diameter is directly proportional to the static piercing force exerted by the stud 100 on the road. It follows that the flange diameter D₁₁₁ is optimized for providing sufficient but not excess piercing force. In the present context the expression *diameter* is not limited to the largest measurement taken across a circle but any largest measurement taken across any cross-sectional shape of the stud.

The tip 112 is shaped to interact with the road surface. The illustrated tip 112 is cylindrical with a flat distal surface. Other shapes are, however, foreseeable, such as star-like, polygons, chamfered and/or rounded polygons, trapezoidal, etc.

The tip 112 may be made of the same, optionally homogenous, material as the rest of the pin 110. Alternatively, the material properties of the tip 112 may be improved with a locally applied heat treatment. Alternatively, the tip 112 may be constructed from a material that is different to the rest of the pin 110.

The pin 110 has a shaft 113, which connects the flange 111 to the tip 112 by extending along the longitudinal dimension Y. The shaft 113 may exhibit a generally cylindrical shape meaning that the shaft 113 is elongated along the longitudinal dimension Y and has a circular shape in a cross-sectional plane in respect to the longitudinal dimension Y. Because the shaft 113 has a diameter smaller than the flange diameter D₁₁₁, the pin 110 features a transition 114 between the shaft 113 and the flange 111, such as a rounded of chamfered shape.

The pin 110 is preferably constructed as a unitary piece. In the present context the expression "unitary" means that the pin 110 is constructed as an integral piece without assembly. In other words the pin is not assembled from a shaft and a flange, for example. The pin 110 may be constructed as a homogenous unitary piece meaning that is formed of a single wear resistant material. Suitable materials of the pin 110 include, for example, hardened steel, hardened aluminium, an alloy comprising hardened steel or hardened aluminium, composites, and ceramics. The pin 110 is preferably made with a powder metallurgy manufacturing process, such as sintering.

Alternatively, the unitary piece may be constructed of more than one wear resistant material by a powder metallurgy process, such as sintering several components into a single mold. Generally speaking, the pin 110 may provided with a powder metallurgy process so that several raw materials form one unitary pin. Different raw materials may construct respective different sections of the unitary pin. For example, a first wear resistant material may form the tip section of the pin 110, whereas a second, potentially less wear resistant material, may form the flange section of the pin 110. The materials may then be compacted and sintered to one unitary pin. Sintering of more than two raw materials to provide a pin 110 is also foreseen, for example by constructing the tip section of a first material, the shaft section from another material, and the flange section for a third material. The first and third material may be the same or different from one another.

Let us next consider the sleeve 120.

The sleeve 120 has a body including or made exclusively of, rubber a thermoplastic elastomer or silicone based material. If the sleeve 120 is constructed of rubber, the properties of the rubber are preferably matched with the rubber found on the tread, carcass, or inner liner of the host tyre.

The sleeve 120 is preferably constructed from a thermoplastic elastomer that has a hardness that is substantially matched with the host tyre. Accordingly, a working hardness range for the sleeve 120 is between 35 and 85 Shore A. According to a more specific embodiment, the hardness is between 45 and 75 Shore A, preferably between 50 and 70 Shore A. According to a very specific embodiment, the hardness is between 60 and 65 Shore A, preferably between 62 and 64 Shore A. The shore A value may be measured for 15 seconds at 23 degrees Celsius, such as defined in ISO 868. Accordingly, the sleeve 120 may be considered to be well matched with the hardness of the surrounding tyre compound.

Additionally or alternatively, it may be defined that the elastic modulus of tread is equal to or different by 100 per cent or less, preferably 50 per cent or less, more preferably 25 per cent or less, such as 15 per cent or less than the elastic modulus of the sleeve 120 under similar measurement circumstances.

According to one embodiment, the sleeve 120 comprises or is constructed, such as injection moulded, exclusively from a thermoplastic elastomer or thermoplastic elastomer based material. Foreseeable thermoplastic materials include non-hygroscopic thermoplastic vulcanizates (TPV), such as the Santoprene^{™} TPV, e.g. in a 64 Shore A variant measured for 15 seconds at 23 degrees Celsius according to ISO 868. Other suitable elastomers include fluoro-liquid silicone rubber (F-LSR), fluorosilicone rubber (FSR), high consistency rubber (HCR), liquid silicone rubber (LSR). SILASTIC^{™} and XIAMETER^{™} produced by DOW^{®} exemplify some commercially available alternatives of suitable F-LSR, FSR, HCR, and LSR materials. For example, the SILASTIC^{™} HCR 65 or HCE 70 are foreseen as applicable options.

According to a particular embodiment, the sleeve 120 comprises or is constructed, such as injection moulded, exclusively from silicone rubber, which is a silicone based material. One practical example of a suitable silicone rubber is XIAMETER^{™} RBL-2004-60 liquid silicone rubber produced by DOW^{®}. The commercial example has a Shore A hardness of approximately 60 measured according to ASTM D2240.

By matching the sleeve and tyre tread hardness with each other the attachment of the sleeve 120 and the tyre rubber may, according to optimal circumstances, may be reinforced by cross-linking between the sleeve and tyre material.

The sleeve 120 is elongated along the longitudinal dimension Y of the stud 100. The cross-sectional shape of the sleeve 120 may be varied in a plane across and/or along the longitudinal axis of the stud 100, i.e. the center axis extending in the longitudinal dimension Y. According to the illustrated example the sleeve 120 extends between a generally planar bottom 121 and top 122 with a varying thickness. The sleeve 120 may have a relatively thick middle portion, i.e. a trunk 124. According to the illustrated example the trunk 124 has a diameter D₁₂₄, which represents the largest cross-section of the sleeve 120. By varying the longitudinal length of the trunk 124 along the longitudinal dimension Y and/or the width along the radial dimension X, the supporting properties of the sleeve 120 may be adjusted according to the practical application. According to the illustrated example, the trunk diameter D₁₂₄ is set smaller than the flange diameter D₁₁₁ with the trunk 124 extending approximately one third of the longitudinal extension of the sleeve 124. The relatively narrow bottom 121 may transition to the relatively wide trunk 124 through a transition 123, which according to the illustrated exemplary embodiment is a chamfered surface. The relatively narrow top 122, on the other hand, may transition to the relatively wide trunk 124 through a transition 125, which according to the illustrated exemplary embodiment is a bell surface. The depicted example is provided only as an illustration of at least one working alternative but, naturally, others are also foreseen.

The sleeve 126 is provided with a pin hole 126, which according to the illustrated example is a center hole. Alternatively, offset pin holes are also possible. The pin hole 126 extends through the sleeve 120 for the purpose of receiving the pin 110. The sleeve 120 is shorter than the pin 110, whereby the flange 111 and the tip 112 are exposed and the shaft 113 covered by the sleeve 120. As the shaft 113 is generally cylindrical, so is the pin hole 126. Other shapes are, however, foreseeable.

The diameter of the pin hole 126 may have a nominal size smaller than the diameter of the shaft 113, whereby the fit between the pin 110 and the sleeve 120 involves deformation of the sleeve 120 resulting in minimal degree of freedom for the pin 110 to move in respect to the sleeve 120.

According to an embodiment, the sleeve 120 is attached to the pin 110 only through a mechanical joint, i.e. without the use of an adhesive. The sleeve 120 is thus a distinctly different part than the pin 110. It has been found that by omitting adhesives, which are typically used to attach a metal and elastomer pieces together, is preferable because it surprisingly leads to a more controlled movement of the pin 110 in respect to the surrounding tyre.

Relative movement may occur between the sleeve 120 and the pin 110. In particular, the sleeve 120 may translate in respect to the pin 110 along the longitudinal dimension Y of the stud 100. Additionally or alternatively, the sleeve 120 may rotate in respect to the pin 110 about a rotation axis, which extends along the longitudinal dimension Y of the stud 100. Additionally or alternatively, the sleeve 120 may translate in respect to the pin 110 in the transversal dimension X of the stud 100, i.e. radially. In other words, the movement of the sleeve 120 may be axial or radial translation and/or rotation in respect to the pin 110.

The joint between the pin 110 and the sleeve 120 may also free of a lubricant. Contrary to the teachings of FI 77186 B, gliding between the pin 110 and sleeve 120 may also be discouraged so as to provide pin movement only through elastic deformation of the enveloping sleeve material. Alternatively, movement between the pin 110 and the sleeve 120 is only minimal.

According to an alternative embodiment, the sleeve 120 is constructed from more than one material. For example, the sleeve 120 may be constructed from a first material forming the inner core of the sleeve and another material forming the outer body surrounding the sleeve. The inner core may comprise a material that is relatively hard compared to the outer body material. For example, the outer material, which engages the surrounding rubber, may have a hardness of between 35 and 85 Shore A, such as between 45 and 75 Shore A, preferably between 50 and 70 Shore A, more preferably between 60 and 65 Shore A, particularly between 62 and 64 Shore A. The shore A value may be measured for 15 seconds at 23 degrees Celsius, such as defined in ISO 868.. Accordingly, the outer body is well matched with the hardness of the surrounding tyre compound. The inner core, on the other hand, may comprise a more durable and wear resistant material. Such a two-component construction may be achieved with a two-component injection moulding.

The stud 100 may be manufactured by, on the one hand, producing the pin 110 from a wear resistant material with an additive manufacturing technique, such as sintering, as a homogenous piece and, on the other hand, producing the sleeve 120 from a thermoplastic elastomer or silicone based material with an additive manufacturing technique, such as injection moulding, as a homogenous piece. The wear resistant material preferably has a Riley-Stoker value of 50 or more, typically between 50 and 120. With the pieces produced, the pin 110 may simply be inserted into the pin hole 126 preferably without using a lubricant or adhesive.

Alternatively, the sleeve 120 may be injection moulded onto a pre-fabricated pin 110, which is placed in the mould as an insert.

As already implied, the proposed stud 100 finds industrial applicability in winter tyres, particularly pneumatic winter tyres. Both passenger and commercial vehicles or various weight classes may benefit from such tyre both for road and off-road use. The tread of the tyre may comprise a plurality of such studs 100 distributed according to the particular practical application.

The manufacturing of such a tyre is relatively straight forward. First, the tyre body is produced with conventional means resulting in a tread pattern on a carcass formed from a relatively soft material suitable for winter tyre use. The tread rubber compound may have a hardness ranging between 50 and 70 Shore A, preferably between 60 and 65 Shore A, at 20 degrees Celsius. The tread is provided with a plurality of generally cylindrical stud holes for receiving a corresponding plurality of studs with conventional means. Next, a plurality of studs 100 herein proposed are installed into the stud holes flange first preferably with an automated stud gun such that the top 122 of the sleeve 120 is aligned with the tread surface of the tyre leaving the tip 112 of the pin 100 exposed and protruding from the tread surface by less than 2 mm, e.g. between 0,8 and 1,2 mm. With the hardness of the sleeve 120 and the tread material selected to substantially match each other, the pin 110 is housed in the tread as if the shaft 113 was interfaced directly with the tyre. However, the sleeve 120 is there between the pin 110 and the tread to provide support as well as orientation and vibration control for the pin 110.

According to a preferred embodiment, preceding the studding stage, the stud holes are primed with a cross-linking catalyst, such as a water-based soap solution, for facilitating cross-linking between the sleeve 120 and the tyre tread rubber compound. The soap solution will not only facilitate studding but, subsequently, also promote firm attachment of the sleeve 120 to the tread through cross-linking between the thermoplastic elastomer or silicone based material of the sleeve and the rubber compound of the tyre.

It is to be understood that the embodiments of the disclosure disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present disclosure may be referred to herein along with alternatives for the various components thereof. It is understood that such embodiments, examples, and alternatives are not to be construed as de facto equivalents of one another, but are to be considered as separate and autonomous representations of the present disclosure.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the present disclosure in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

| NO. | FEATURE |
|---|---|
| 100 | stud |
| 110 | pin |
| 111 | flange |
| 112 | tip |
| 113 | shaft |
| 114 | transition |
| 120 | sleeve |
| 121 | bottom |
| 122 | top |
| 123 | bottom transition |
| 124 | trunk |
| 125 | top transition |
| 126 | pin hole |
| D124 | trunk diameter |
| D₁₁₁ | flange diameter |
| Y | longitudinal dimension |
| X | radial dimension |

## Claims

1. A stud (100) for a pneumatic tyre, comprising:
- a sleeve (120) comprising a pin hole (126) and
- a pin (110) being formed as a unitary piece from one or more than one wear resistant material or compound and inserted into the pin hole (126),
**characterized in that**:
- the sleeve (120) comprises or is formed of rubber, a thermoplastic elastomer or silicone based material and **in that**
- the sleeve (120) is made from a material having a hardness between 35 and 85 Shore A measured for 15 seconds at 23 degrees Celsius.

2. The stud (100) according to claim 1, wherein:
- the stud (100) exhibits a tallness (T) in a longitudinal dimension (Y) and wherein
- the tallness (T) of the stud (100) is defined by the extension of the pin (110) in the longitudinal dimension (Y)

3. The stud (100) according to claim 1 or 2, wherein:
- the stud (100) exhibits a tallness (T) in a longitudinal dimension (Y) and wherein
- the sleeve (120) is configured to allow movement of the pin (110) in the pin hole (126) in the longitudinal dimension (Y), in a transversal dimension (X) in respect to the longitudinal dimension, or both in the longitudinal (Y) and transversal dimension (X), and/or wherein
- the sleeve (120) is configured to allow rotational movement of the pin (110) about a rotation axis, which extends in the longitudinal dimension (Y).

4. The stud (100) according to any one of the preceding claims, wherein the sleeve (120) is made from a material having a hardness between 45 and 75 Shore A, preferably between 50 and 70 Shore A, more preferably between 60 and 65 Shore A, particularly between 62 and 64 Shore A, measured for 15 seconds at 23 degrees Celsius.

5. The stud (100) according to any one of the preceding claims, wherein the pin (110) comprises:
- a flange (111) at one end of the pin (110),
- a tip (112) at another end of the pin (110), and
- a shaft (113) extending between the flange (111) and tip (112).

6. The stud (100) according to any one of the preceding claims, wherein the flange (111) exhibits a diameter (D₁₁₁) across the longitudinal dimension (T) of the stud (100), which flange diameter (D₁₁₁) is greater than the respective diameter of the shaft (113).

7. The stud (100) according to any one of the preceding claims, wherein the flange diameter (D₁₁₁) defines the greatest extension of the stud (100) in the transversal dimension (X).

8. The stud (100) according to any one of the preceding claims, wherein:
- the flange (111) is exposed at one end of the sleeve (120),
- the tip (112) is exposed at another end of the sleeve (120), and
- the shaft (113) is covered by the sleeve (120) and extends through the pin hole (126).

9. The stud (100) according to any one of the preceding claims, wherein the pin (100) is made from a material selected of a list comprising or consisting of:
- hardened steel,
- hardened aluminium,
- an alloy comprising hardened steel or hardened aluminium,
- a composite, and
- a ceramic.

10. The stud (100) according to any one of the preceding claims, wherein the pin (110) and sleeve (120) is joined to the sleeve (120) only through a mechanical joint there between.

11. The stud (100) according to any one of the preceding claims, wherein the stud comprises no adhesive or lubricant between the pin and the sleeve.

12. The stud (100) according to any one of the preceding claims, wherein the pin (110) being formed as a unitary piece from one single, optionally homogenous, wear resistant material or compound.

13. A method of manufacturing a stud (100) according to any one of the preceding claims, comprising:
(a) providing the pin (110) as a unitary piece of one or more than one wear resistant material,
(b) providing the sleeve (120) as unitary piece of rubber, a thermoplastic elastomer or a silicone based material,
(c) fitting the pin (110) into the pin hole (126) of the sleeve (120) during step (b) as an insert or after step (b) by inserting the pin (110) through the pin hole (126).

14. The method according to claim 13, wherein the pin (110) is provided with a powder metallurgy manufacturing process.

15. The method according to claim 13 or 14, wherein the pin (110) is constructed as a homogenous unitary piece formed of a single wear resistant material.

16. The method according to claim 13 or 15, wherein the pin (110) is provided with a powder metallurgy process from more several raw materials to construct respective several sections of the unitary pin (110).

17. A pneumatic winter tyre comprising:
- a rubber tread and
- a plurality of studs (100) according to any one of the preceding claims 1 to 3 or 5 to 12 fitted into the tread.

18. The pneumatic winter tyre according to claim 16, wherein the tread and the sleeve (120) of the stud (100) both exhibit a hardness between 50 and 70 Shore A, particularly between 60 and 65 Shore A, at 20 degrees Celsius.

19. The pneumatic winter tyre according to claim 16 or 17, wherein the elastic modulus of the rubber of the tread, carcass or inner liner of the pneumatic winter tyre is equal to or different by 25 per cent or less, preferably 15 per cent or less than the elastic modulus of the sleeve (120) of the stud (100) under similar measurement circumstances.

20. A method of manufacturing a pneumatic winter tyre according to any one of the preceding claims 17 to 19, comprising:
(A)providing a tyre with a tread,
(B) providing the tread with a plurality of stud holes,
(C)providing a plurality of studs (100) according to any one of the preceding claims 1 to 12.
(D) fitting the plurality of studs (100) into the corresponding plurality of stud holes.

21. The method according to claim 20, comprising, preceding step (D), priming the plurality of stud holes with a cross-linking catalyst, such as a water-based soap solution.
